# EUROPÄISCHE PATENTANMELDUNG

(11) **EP 1 669 887 A1**
(43) Veröffentlichungstag der Anmeldung: **14.06.2006**
(21) Anmeldenummer: 04029462.1
(22) Anmeldetag: 13.12.2004
(51) Int. Cl.: G06F 17/30

(54) **Datenarchivierung**

(71) Anmelder: UBS AG, 8001 Zürich (CH)
(72) Erfinder: Ernst, Stephan, 5436 Würenlos (CH); Schumann, Markus, 8304 Wallisellen (CH)
(74) Vertreter: Röthinger, Rainer

(57) **Zusammenfassung**

Ein computer-implementiertes Verfahren zur Verwaltung von elektronischen Daten, umfasst die Schritte: Einschreiben eines Datensatzes in eine erste Datenbank (50), Prüfen des unveränderten Inhalts dieses einen Datensatzes auf mindestens eine vorbestimmte Bedingung und Einschreiben des einen Datensatzes in eine zweite Datenbank (52) abhängig von der Erfüllung der mindestens einen vorbestimmten Bedingung.

## Beschreibung

In vielen Unternehmen, aber auch in Behörden, fallen heutzutage riesige Datenmengen an, die strukturiert und systematisch abgespeichert werden müssen, um auch zu einem späteren Zeitpunkt die Hintergründe und Einzelheiten der mit dem Datenanfall verbundenen Vorgänge nachvollziehen zu können und anhand der gespeicherten Daten Auswertungen vornehmen zu können. Ein Beispiel sind Banken. Im Bankgeschäft zeigt sich in den letzten Jahren und sogar Jahrzehnten eine zunehmende Ausdifferenzierung der angebotenen Dienstleistungen und Preise. Frühere Einheitsdienstleistungen (Konto, Depot) mit wenigen Varianten werden durch eine zunehmend größere Anzahl unterschiedlicher Dienstleistungen und Preisalternativen ersetzt. Die Palette der angebotenen Finanzinstrumente wird stetig breiter und die einzelnen Finanzinstrumente kreativer und raffinierter.

Gleichzeitig steigen von Seiten der Kunden die Ansprüche an die Banken hinsichtlich Transparenz, Konsistenz und Vollständigkeit der Informationen, die dem Kunden von der Bank bereitgestellt werden. Viele Kunden geben sich nicht mehr zufrieden mit einfachen Auskünften zum aktuellen Saldo ihres Kontos. Gerade anspruchsvolle und vermögende Kunden, die eine Vielzahl unterschiedlicher Dienstleistungen einer Bank beanspruchen, beispielsweise weil sie Wertpapier-, Immobilien- und andere Investmentgeschäfte über die Bank tätigen, verlangen vollständige und detaillierte Informationen über jeden Geschäftsfall, und dies in kurzer Zeit. Für die automatisierte Erstellung eines Vermögensausweises für einen Kunden sind dann detaillierte Informationen über alle Transaktionen erforderlich, die das Vermögen des Kunden betreffen, seien dies Bargeldtransaktionen, Wertpapiergeschäfte oder dergleichen.

Wenn man bedenkt, dass Banken täglich viele Tausend, ja sogar Hunderttausende von Geschäften abwickeln, ist leicht vorzustellen, wie groß die zu bewältigenden und abzuspeichernden Datenmengen im modernen Bankwesen sind. Selbstverständlich gilt dies nicht nur für Banken, sondern auch für zahlreiche andere Organisationen unternehmerischer oder administrativer Natur.

Zur systematischen und geordneten Abspeicherung von Daten werden Datenbanken verwendet. Gemeinhin wird angestrebt, für inhaltlich verwandte Daten eine einzige Datenbank verwenden zu können, die so groß dimensioniert ist, dass sie die gesamte erwartete Datenmenge aufnehmen kann. Je größer eine Datenbank jedoch ist, desto komplexer und zeitaufwendiger gestalten sich Datenbankzugriffe durch Anwendungsprogramme, die auf die vorhandenen Daten in der Datenbank zugreifen wollen. Gleichzeitig ist auch die Aktualisierung der Datenbank durch das Einschreiben neuer Daten entsprechend zeitraubend, und es erfordert aufwendige Maßnahmen, damit während Schreibvorgängen die Datenbank den Anwendungsprogrammen reibungslos für Lesevorgänge zur Verfügung steht.

Vielfach wird deshalb in Kauf genommen, dass nicht alle gewünschten Daten archiviert werden können, sondern man beschränkt sich auf bestimmte Daten, die als absolut notwendig angesehen werden. Dies verringert jedoch notwendigerweise die Detailtiefe der gespeicherten Informationen.

Aufgabe der Erfindung ist es, Informationen ohne Einschränkung ihrer Detailtiefe bei gleichzeitig hoher Verfügbarkeit für Anwendungsprogramme datenbankmäßig speichern können.

Zur Lösung dieser Aufgabe ist erfindungsgemäß ein computer-implementiertes Verfahren zur Verwaltung von elektronischen Daten vorgesehen, welches die Schritte umfasst:
- Einschreiben eines Datensatzes in eine erste Datenbank,
- Prüfen des unveränderten Inhalts dieses einen Datensatzes auf mindestens eine vorbestimmte Bedingung und
- Einschreiben des einen Datensatzes in eine zweite Datenbank abhängig von der Erfüllung der mindestens einen vorbestimmten Bedingung.

Die erfindungsgemäße Lösung bewirkt eine "Bereinigung" einer ersten Datenbank, indem darin gespeicherte Datensätze in eine andere, zweite Datenbank umgeschrieben werden, jedoch nicht abhängig von einem bestimmten Füllgrad der ersten Datenbank, sondern abhängig davon, ob der Inhalt des betreffenden Datensatzes eine oder mehrere vorbestimmte Bedingungen erfüllt. Auf diese Weise kann die in der ersten Datenbank gespeicherte Datenmenge vergleichsweise gering gehalten werden. Da Datensätze jedoch stets zunächst in die erste Datenbank eingeschrieben werden, bevor sie zu einem späteren Zeitpunkt in die zweite Datenbank ausgelagert werden, sind rasche Schreibvorgänge und auch rasche Lesevorgänge in der ersten Datenbank möglich.

Dieses erfindungsgemäße Konzept ermöglicht es, die erste Datenbank sozusagen als "variable" Datenbank zu nutzen und die zweite Datenbank als "statische" Datenbank zu nutzen. In Banken und anderen Organisationen fallen oftmals laufend neue (frische) Daten an, die datenbankmäßig abgespeichert werden sollen. Die erste Datenbank kann gemäß der Erfindung zur erstmaligen Aufnahme derartiger neuer Daten verwendet werden. Sie bildet dann eine "aktuelle" Datenbank, deren Inhalt sich während eines betrachteten bestimmten Zeitraums, beispielweise eines Arbeitstages, ständig verändert. Durch geeignete Festlegung der vorbestimmten Bedingung(en) können nun zwei Effekte erreicht werden: Zum einen kann erreicht werden, dass die in der ersten Datenbank enthaltene Datenmenge wesentlich kleiner als die Datenmenge in der zweiten Datenbank ist. Zum anderen kann erreicht werden, dass Schreibvorgänge an der zweiten Datenbank nicht laufend wie bei der ersten Datenbank vorkommen, sondern in größeren Zeitabständen, sodass die zweite Datenbank während des zuvor angesprochenen bestimmten Zeitraums unverändert bleibt und demnach als statisch angesehen werden kann. Eine derartige statische Datenbank lässt sich technisch einfacher aufbauen und auch leichter betreiben als eine sich ständig verändernde Datenbank. Schreibvorgänge an der zweiten Datenbank können beispielsweise auf bestimmte Zeiträume beschränkt werden, etwa während der Nacht oder nur an Wochenenden.

Die zweite Datenbank wird im weiteren Verlauf auch als historische Datenbank bezeichnet. Dies ist freilich nicht dahingehend zu verstehen, dass in der zweiten Datenbank nur solche Daten gespeichert sind, die aus der Sicht eines Anwendungsprogramms alt sind. Die Aktualität der Daten aus Sicht der Anwendungsprogramme kann in beiden Datenbanken hoch sein. Für eine vollständige Auswertung kann es ohne weiteres sein, dass ein Anwendungsprogramm auf Daten aus beiden Datenbanken zugreifen können muss. Aus Gründen der geschäftlichen Sicherheit kann es allerdings sinnvoll sein, in der ersten Datenbank stets zumindest "überlebensnotwendige" Daten vorzuhalten, die für die Geschäfte der Bank oder der gleichen Organisation notwendig sind. Beispielsweise können diese überlebensnotwendigen Daten Auskünfte über Kundensaldi und vor kurzem getätigte Geschäfte umfassen. Der Begriff "historisch" bezieht sich danach lediglich auf die Tatsache, dass die zweite Datenbank in der Historie der Speicherorte der verschiedenen Daten nach der ersten Datenbank kommt.

Da die zweite Datenbank als statische Datenbank aufgebaut werden kann, kann sie ohne weiteres so dimensioniert werden, dass sie sehr große Datenmengen aufnehmen kann. Da die zweite Datenbank dann als Reservoir für eine große Masse an Daten zur Verfügung steht, kann mit der erfindungsgemäßen Lösung eine hohe Detailtiefe der abzuspeichernden Informationen realisiert werden. Beispielsweise können zu den verschiedenen Zwischenphasen eines Investments - oder allgemein eines Geschäftsfalls - jeweils Datensätze angelegt und abgespeichert werden, die den Status des Geschäftsfalls zu den verschiedenen Phasen repräsentieren.

Es hat sich gezeigt, dass die erste Datenbank sehr viel kleiner als die zweite Datenbank sein kann. Beispielsweise kann die Größe der ersten Datenbank weniger als 10%, insbesondere weniger als 5%, der Größe der zweiten Datenbank betragen.

Bei dem erfindungsgemäßen Verfahren werden Datensätze in der ersten Datenbank vorzugsweise in engem zeitlichen Zusammenhang mit ihrem Einschreiben in die zweite Datenbank gelöscht. Das Lesen (für den Zweck der Überführung in die zweite Datenbank) und Löschen eines Datensatzes in der ersten Datenbank kann insbesondere in einem gemeinsamen Arbeitsgang erfolgen. Es ist freilich nicht ausgeschlossen, einen Datensatz in der ersten Datenbank noch für eine bestimmte Zeit vorzuhalten, nachdem er in die zweite Datenbank eingeschrieben wurde.

In vielen Fällen können mehrere Datensätze, die in der ersten Datenbank gleichzeitig oder zeitlich nacheinander abgespeichert wurden, logisch miteinander verknüpft sein, beispielsweise weil sie sich auf einen gemeinsamen zugrundeliegenden Geschäftsfall beziehen. Auf der Datenebene kann sich eine solche logische Verknüpfung durch ein gemeinsames Datenelement äußern, das in jedem der einander zugehörigen Datensätze enthalten ist und den Sachverhalt, auf den sich die Datensätze beziehen, also beispielsweise den zugrundeliegenden Geschäftsfall, eindeutig identifiziert. Gemäß einer bevorzugten Weiterbildung der Erfindung können dann abhängig vom Einschreiben eines Datensatzes in die zweite Datenbank mehrere weitere Datensätze, die mit diesem einen Datensatz logisch verknüpft sind, ebenfalls in die zweite Datenbank eingeschrieben werden. Auch hierbei wird vorzugsweise jeder der weiteren Datensätze in der ersten Datenbank in engem zeitlichen Zusammenhang mit dem Einschreiben des jeweiligen Datensatzes in die zweite Datenbank gelöscht.

Zumindest ein Teil der in der ersten Datenbank abgespeicherten Datensätze enthält bei einer bevorzugten Ausführungsform ein Statusfeld, in dem ein Status eingetragen ist. Dieser Status bezieht sich vorzugsweise nicht auf den Datensatz selbst, sondern auf den durch den Datensatz repräsentierten Sachverhalt. Beispielsweise kann sich der Status auf den Zustand beziehen, in dem sich eine einzelne Transaktion oder ein ganzer Geschäftsfall, der möglicherweise mehrere solcher einzelner Transaktionen beinhaltet, befindet. Der Prüfschritt kann dabei das Prüfen eines derartigen Statusfelds der Datensätze auf einen vorbestimmten Status umfassen.

Ebenfalls gemäß einer bevorzugten Ausführungsform der Erfindung kann zumindest ein Teil der in der ersten Datenbank abgespeicherten Datensätze eine Zeitangabe enthalten. Alternativ oder zusätzlich zur obigen Statusprüfung kann der Prüfschritt dann das Prüfen umfassen, ob die in einem Datensatz enthaltene Zeitangabe eine vorbestimmte Bedingung erfüllt.

Es kann vorkommen, dass sich bereits in die zweite Datenbank überschriebene Datensätze, d.h. eigentlich deren Inhalt, zu einem späteren Zeitpunkt als falsch oder ungültig erweisen. Es besteht nun die Möglichkeit, durch einen Schreibzugriff auf den betreffenden Datensatz diesen zu ändern. Solche Schreibzugriffe auf Datenbanken mit dem Zweck einer Änderung eines bestehenden Datensatzes sind jedoch vergleichsweise aufwendig. Bei einer bevorzugten Ausführungsform wird deshalb der falsche oder ungültige Datensatz in der zweiten Datenbank - zumindest vorübergehend - dort unverändert belassen und stattdessen in der ersten Datenbank ein Hinweis vermerkt, dass der betreffende Datensatz der zweiten Datenbank ungültig ist. Hierzu wird in die erste Datenbank eine Datensatzkennung des betreffenden Datensatzes eingeschrieben, die den Datensatz eindeutig identifiziert, und außerdem wird in die erste Datenbank in Zuordnung zu der Datensatzkennung ein den Datensatz als ungültig kennzeichnender Ungültigkeitshinweis eingeschrieben. Insbesondere ist es denkbar, in der ersten Datenbank eine spezielle Tabelle einzurichten, in der allein ungültige Datensätze der zweiten Datenbank vermerkt werden.

Zumindest ein Teil der in die erste Datenbank einzuschreibenden Datensätze kann ein Zeitstempelfeld mit einem Zeitstempel enthalten. Dieser Zeitstempel kann zweckmäßigerweise dazu genutzt werden, Datensätze voneinander zu unterscheiden, die zwar ein und dasselbe Informationsobjekt repräsentieren, jedoch verschiedene Versionen dieses Informationsobjekts beschreiben. Es sind Situationen vorstellbar, in denen ein datentechnisch abgebildetes Informationsobjekt verschiedene Phasen oder Zustände während seiner Existenz durchläuft. Wird beispielsweise ein Geschäftsauftrag als ein solches Informationsobjekt angesehen, so können ohne weiteres verschiedene Phasen im Leben des Geschäftsauftrags identifiziert werden. Beispielsweise kann eine Phase definiert werden, in der der Geschäftsauftrag erteilt, aber noch nicht akzeptiert ist. Dann kann eine Phase definiert werden, in der der Geschäftsauftrag akzeptiert ist, aber noch nicht mit seiner Abwicklung begonnen wurde. Ferner kann eine Phase definiert werden, in der der Geschäftsauftrag vollständig ausgeführt ist. Selbstverständlich können noch weitere Phasen oder andere Phasen definiert werden.

Für eine möglichst große Detailtiefe der gespeicherten Informationen über den Geschäftsfall wäre es wünschenswert, für jede oder zumindest einige der verschiedenen Phasen, die der Geschäftsfall durchläuft, Daten abzuspeichern. Mit Hilfe des Zeitstempels können nun Versionen desselben Informationsobjekts datentechnisch abgebildet werden, indem für jede Version ein Datensatz mit stets derselben Datensatzkennung erzeugt wird, in das Zeitstempelfeld der Datensätze dieses Informationsobjekts aber jeweils ein anderer Zeitstempel eingetragen wird. Nähere Informationen über die jeweilige Version können dann in ein oder mehr zusätzliche Datensatzfelder eingetragen werden, von denen eines das schon erwähnte Statusfeld sein kann. In dieses Statusfeld kann beispielsweise eingetragen werden, in welcher Phase oder welchem Status sich ein Geschäftsauftrag - oder allgemein das betreffende Informationsobjekt - befindet. Vorteilhaft an dieser Versionierung von Datensätzen durch Zeitstempel ist, dass nicht aufwendige Änderungen an bestehenden Datensätzen vorgenommen werden müssen, um Änderungen des zugrundeliegenden Informationsobjekts abbilden zu können. Der Zeitstempel enthält vorteilhafterweise eine Datums- und eine Uhrzeitangabe.

Es kann danach vorkommen, dass in der ersten Datenbank in Zuordnung zu ein- und demselben Informationsobjekt mehrere Datensätze vorhanden sind, die jeweils eine unterschiedliche Version dieses Informationsobjekts repräsentieren und zu unterschiedlichen Zeitpunkten in die erste Datenbank eingeschrieben wurden und deshalb einen unterschiedlichen Zeitstempel enthalten. Eine bevorzugte Ausführungsform sieht dann vor, dass abhängig davon, dass derjenige dieser Datensätze die mindestens eine vorbestimmte Bedingung erfüllt, dessen Zeitstempel die jüngste Version des Informationsobjekts identifiziert, jeder dieser Datensätze in die zweite Datenbank eingeschrieben wird. Mit anderen Worten werden bei dieser Ausführungsform automatisch auch alle älteren Versionen eines Datensatzes bzw. Informationsobjekts in die zweite Datenbank eingeschrieben, wenn die jüngste Version die vorbestimmte(n) Bedingung(en) erfüllt.

Abhängig von dem Informationsmodell, auf dessen Grundlage Lebenssachverhalte in Datensätze abgebildet werden, kann es vorkommen, dass in der ersten Datenbank Datensätze enthalten sind, die verschiedene, jedoch miteinander logisch verknüpfte Informationsobjekte repräsentieren. So kann beispielsweise ein Datensatz allgemein einen Geschäftsfall repräsentieren und ein oder mehrere andere Datensätze können jeweils eine im Rahmen des Geschäftsfalls erfolgte einzelne Transaktion repräsentieren. Die Transaktions-Datensätze werden dabei ein Datenelement enthalten, das auch in dem Geschäftsfall-Datensatz enthalten ist und den Geschäftsfall eindeutig identifiziert. Auf diese Weise werden der Geschäftsfall-Datensatz und die Transaktions-Datensätze logisch miteinander verknüpft.

Es kann dann vorteilhaft sein, wenn bei Erfüllung der mindestens einen vorbestimmten Bedingung durch einen der logisch miteinander verknüpften Datensätze auch die übrigen dieser Datensätze von der ersten Datenbank in die zweite Datenbank umgeschrieben werden. Insbesondere wenn die Informationsobjekte hierarchisch miteinander verknüpft sind, kann das Überschreiben einer Gruppe derart hierarchisch verknüpfter Datensätze von der ersten in die zweite Datenbank davon abhängig gemacht werden, dass ein Datensatz, der ein Informationsobjekt einer höchsten Hierarchieebene repräsentiert, die mindestens eine vorbestimmte Bedingung erfüllt.

Die Erfindung betrifft ferner ein Computerprogrammprodukt, welches die Ausführung des Verfahrens der vorstehend erläuterten Art bewirkt, wenn es von einem Computer abgearbeitet wird. Das Computerprogrammprodukt kann auf einem computerlesbaren magnetischen oder optischen Informationsträger (etwa einer CD-ROM oder einer Minidisk) gespeichert sein.

Nachfolgend wird die Erfindung anhand der beigefügten Zeichnungen näher erläutert. Es stellen dar:
Fig. 1 ein beispielhaftes Modell zur datentechnischen Abbildung von Geschäftsfällen,
Fig. 2 ein beispielhaftes Datensatzformat,
Fig. 3 schematisch eine beispielhafte Architektur zur Durchführung des erfindungsgemäßen Verfahrens und
Fig. 4 einen beispielhaften Datenbaum für einen Geschäftsfall.

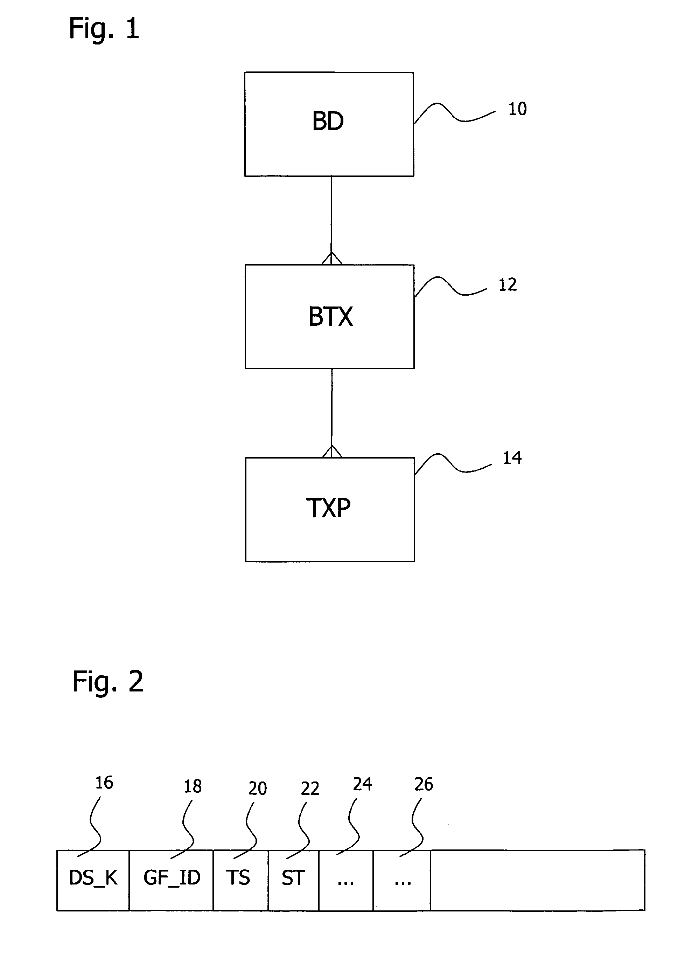

Fig. 1 stellt verschiedene Informationsobjekte 10, 12, 14 eines hierarchischen Informationsmodells dar, nach dem bei einem Ausführungsbeispiel der Erfindung Sachverhalte datentechnisch abgebildet werden. Zur Abbildung eines Sachverhalts werden die Informationsobjekte sozusagen wie Legobausteine zu einem Gesamtbild zusammengesetzt. Gemäß dem Informationsmodell können einem Informationsobjekt 10 ein oder mehrere Informationsobjekte 12 zugeordnet sein und jedem Informationsobjekt 12 können wiederum ein oder mehrere Informationsobjekte 14 zugeordnet sein. Das Informationsobjekt 10 steht somit in der Hierarchie am höchsten, während die Informationsobjekte 12 in der Mitte der Hierarchie stehen und die Informationsobjekte 14 hierarchisch unten sind.

Es hat sich gezeigt, dass sich ein solches Informationsmodell besonders gut eignet, um Dienstleistungen einer Bank datentechnisch zu modellieren. Dabei kann das Informationsobjekt 10 zur Beschreibung der mit einem Kunden vereinbarten Gesamtdienstleistung (Geschäftsfall; BD) verwendet werden, das Informationsobjekt 12 zur Beschreibung einer einzelnen von der Bank im Rahmen der Gesamtdienstleistung erbrachten Leistung (Transaktion; BTX) dienen und das Informationsobjekt 14 als Repräsentant eines von der Bank im Rahmen der Erbringung der betreffenden Einzelleistung bearbeiteten (z.B. bewegten, erstellten, versandten) Transaktionsobjekts (TXP) dienen. Typische Einzelleistungen sind beispielsweise eine einzelne Zahlungs-überweisung, ein Aktienkauf an der Börse, eine Zinsabrechnung, eine Adressänderung oder die Erstellung (Druck und Versand) einer Abrechnung über einen Börsenkauf. Ein Transaktionsobjekt kann beispielsweise ein Wertpaket sein, das eine im Rahmen einer Transaktion bewegte Menge eines Finanzinstruments (Aktie, Geld, Schuldpapier) definiert. Ein anderes Transaktionsobjekt kann den Preis oder Gegenwert eines Wertpakets beschreiben. Ferner können Transaktionsobjekte Steuerbewertungen, Börsenabrechnungen, Vertrags- oder Kundendaten und andere strukturierte Informationen repräsentieren, die im Zusammenhang mit einer im Kundengeschäft der Bank erbrachten Leistung stehen. Dies sind selbstverständlich nur Beispiele für mögliche Transaktionsobjekte, die keineswegs erschöpfend sind.

Da sich eine Gesamtdienstleistung aus mehreren Einzelleistungen zusammensetzen kann und jede Einzelleistung mehrere bearbeitete Objekte beinhalten kann, ist ohne weiteres verständlich, dass jedem Informationsobjekt 10 mehrere Informationsobjekte 12 und jedem Informationsobjekt 12 mehrere Informationsobjekte 14 zugeordnet sein können. Jedes Informationsobjekt 14 ist jedoch stets nur einem einzigen Informationsobjekt 12 zugeordnet und jedes Informationsobjekt 12 stets nur einem einzigen Informationsobjekt 10 zugeordnet.

Bei dem hier beschriebenen Ausführungsbeispiel werden die Informationsobjekte 10, 12, 14 durch Datensätze beschrieben, wobei jeder Datensatz ein Informationsobjekt, genauer eine Version eines Informationsobjekts repräsentiert. Um die gegenseitige Zuordnung von Informationsobjekten auch auf der Datensatzebene zu erreichen, kann für jeden Kundenauftrag, der in einem Geschäftsfall resultiert, eine Identifizierungsnummer vergeben werden und diese Identifizierungsnummer in jeden ein Informationsobjekt des betreffenden Geschäftsfalls abbildenden Datensatz eingefügt werden.

Fig. 2 zeigt ein Beispiel eines Datensatzformats, das für die die Informationsobjekte 10, 12, 14 darstellenden Datensätze verwendet werden kann. Die Datensätze weisen eine Vielzahl von Datenelementen auf, von denen in Fig. 2 nur ein Teil gezeigt ist. Insbesondere weist jeder Datensatz als ein Datenelement eine in einem Datenfeld 16 enthaltene Datensatzkennung DS_K auf, die einen Hinweis darauf enthalten kann, um welchen Typ von Informationsobjekt es sich handelt, das durch den betreffenden Datensatz repräsentiert wird, also um ein Informationsobjekt 10 oder ein Informationsobjekt 12 oder ein Informationsobjekt 14. Ferner enthält jeder Datensatz als ein weiteres Datenelement eine in ein Datenfeld 18 eingetragene Identifizierungsnummer GF_ID, welche den Geschäftsfall eindeutig identifiziert, dem der betreffende Datensatz und damit das Informationsobjekt zugeordnet ist. Die Identifizierungsnummer GF_ID identifiziert nicht den Datensatz, erlaubt es aber, logisch miteinander verknüpfte Datensätze zu erkennen, da alle Datensätze, die demselben Geschäftsfall zugeordnet sind, diese Identifizierungsnummer GF_ID enthalten.

Außerdem enthält jeder Datensatz ein Zeitstempelfeld 20, in das ein Zeitstempel TS eingetragen ist. Der Zeitstempel TS repräsentiert eine Datumsangabe und eine Uhrzeitangabe. Die Kennung DS_K und der Zeitstempel TS identifizieren zusammen eindeutig den betreffenden Datensatz. Der Zeitstempel TS erlaubt die Identifizierung, um welche Version es sich bei dem Datensatz mit der Kennung DS_K handelt. Zu unterschiedlichen Zeitpunkten erzeugte Datensätze erhalten unterschiedliche Zeitstempel. Auf diese Weise lässt sich aus den Zeitstempeln mehrerer Datensätze mit derselben Kennung DS_K eine historische Entwicklung des zugrundeliegenden Informationsobjekts nachvollziehen.

Bei dem Ausführungsbeispiel enthält jeder Datensatz zudem ein Statusfeld 22, in das ein Status ST eingetragen ist. Der Status ST gibt einen Zustand des durch den jeweiligen Datensatz dargestellten Informationsobjekts an. Wird das vorstehend erläuterte Datenmodell zur Abbildung von Bankdienstleistungen verwendet, werden in das Statusfeld 22 vorzugsweise nur solche Statusinformationen eingetragen, die kundenrelevant sind, nicht solche, die sich auf die technische und bankinterne Abwicklung eines Geschäftsfalls beziehen. Kundenrelevant ist ein Status dann, wenn sich durch das Erreichen des entsprechenden Zustands die faktische oder rechtliche Situation oder die tatsächlichen Handlungsmöglichkeiten des Kunden ändern. So kann z.B. ein Kunde ein Handelsgeschäft, sobald es ausgeführt wurde (Status: ausgeführt), nicht mehr zurückziehen, sondern nur noch stornieren. Das Statusmodell, das die möglichen Stati definiert, sollte vorzugsweise so gewählt werden, dass der Status stets eine gesicherte Information widerspiegelt. Ein in Bezug auf ein Informationsobjekt gesetzter Status sollte demnach bedeuten, dass alle vor Erreichen dieses Status notwendigen Prozessschritte vollständig abgeschlossen sind. Der Status macht jedoch keine Angaben darüber, ob bereits weitere Prozessschritte, die nach dem erreichten Status zu durchlaufen sind, stattgefunden haben.

Die verfügbaren Stati können für die verschiedenen Informationsobjekte 10, 12, 14 wenigstens teilweise unterschiedlich sein. Im Fall der Abbildung von Bankdienstleistungen können beispielsweise für Geschäftsfall-Informationsobjekte 10 solche Stati wie "beauftragt", "akzeptiert", "zurückgewiesen", "gelöscht", "zurückgezogen", "erfolglos", "beendet wie beauftragt" und "beendet, jedoch nicht wie beauftragt" definiert werden. Für Transaktions-Informationsobjekte 12 können beispielsweise zusätzlich zu den vorstehenden Stati noch solche Stati wie "eingeleitet", "ausgeführt", "abgeschlossen", "vorbereitet zur Buchung" und "gebucht" definiert werden. Einige der vorstehend aufgelisteten Stati können auch für Informationsobjekte 14 verwendet werden.

Zusätzlich zu den Datenfeldern 16, 18, 20, 22 wird jeder Datensatz weitere Datenfelder 24, 26, ... enthalten, in denen das betreffende Informationsobjekt näher beschreibende Informationen (Attribute) abgelegt werden können.

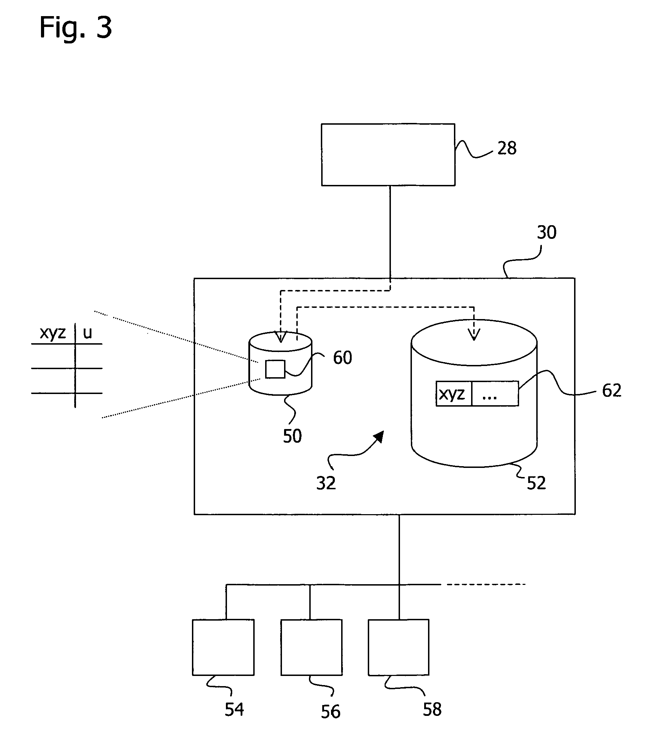

Es wird nun auf Fig. 3 verwiesen. Dort ist schematisch eine computerimplementierte Architektur dargestellt, innerhalb der die Erfindung zur Anwendung kommen kann. Die Architektur umfasst eine Komponente 28, welche Datensätze mit dem in Fig. 2 dargestellten Format erzeugt und an eine nachgeschaltete Komponente 30 liefert, in der die angelieferten Datensätze in einem Datenbanksystem 32 abgespeichert werden. Die Komponente 28 umfasst Software, die die Abwicklung von Kundenaufträgen an eine Bank steuert. Diese Software ist dazu eingerichtet, die eingehenden Kundenaufträge nach dem in Fig. 1 dargestellten Datenmodell auf Datensätze abzubilden. Insbesondere werden von der Komponente 28 die Geschäftsfall-Identifikationsnummern vergeben und verwaltet. Wann immer neue Informationsobjekte zu einem Geschäftsfall zu erschaffen sind, etwa weil eine weitere Transaktion im Rahmen eines Geschäftsfalls auszuführen ist, erzeugt die Komponente 28 eine entsprechende Anzahl von Datensätzen und liefert diese an die Komponente 30. Ebenso erzeugt die Komponente 28 neue Datensätze, wann immer Änderungen an einem schon durch einen oder mehrere bestehende Datensätze abgebildeten Informationsobjekt auftreten, sofern die Natur dieser Änderungen eine Widerspiegelung im Inhalt des Datenbanksystems 32 erfordert. Ein Beispiel für solche Änderungen sind Änderungen des oben erläuterten Status der Informationsobjekte. Aber nicht nur Statusänderungen sollen sich im Inhalt des Datenbanksystems 32 widerspiegeln. Auch für andere Änderungen, speziell solche, die kundenrelevant sind, wird ein Bedarf bestehen, sie im Inhalt des Datenbanksystems 32 widerzuspiegeln. Hierunter fallen beispielsweise Namens- und Adressänderungen der Kunden, Kontenänderungen und dergleichen. In einem solchem Fall kann der Status des betreffenden Informationsobjekts oder der betreffenden Informationsobjekte unverändert bleiben, dennoch muss die Änderung im Inhalt des Datenbanksystems 32 berücksichtigt werden.

Falls für ein Informationsobjekt schon ein Datensatz im Datenbanksystem 32 gespeichert ist, erzeugt die Komponente 28, sofern eine relevante Änderung im Zusammenhang mit diesem Informationsobjekt aufgetreten ist, einen weiteren Datensatz mit derselben Kennung DS_K wie der schon bestehende Datensatz, jedoch mit einem anderen Zeitstempel TS. Der weitere Datensatz repräsentiert demnach eine jüngere Version des Informationsobjekts, während der vorher schon bestehende Datensatz eine ältere Version repräsentiert. Auf diese Weise werden Änderungen an schon bestehenden Datensätzen im Datenbanksystem 32 vermieden. Während der Lebensdauer eines Informationsobjekts kann so eine Vielzahl von Versionen entstehen, wobei sich anhand des Zeitstempels einfach feststellen lässt, welche Version die aktuelle ist oder die zuletzt gültige war.

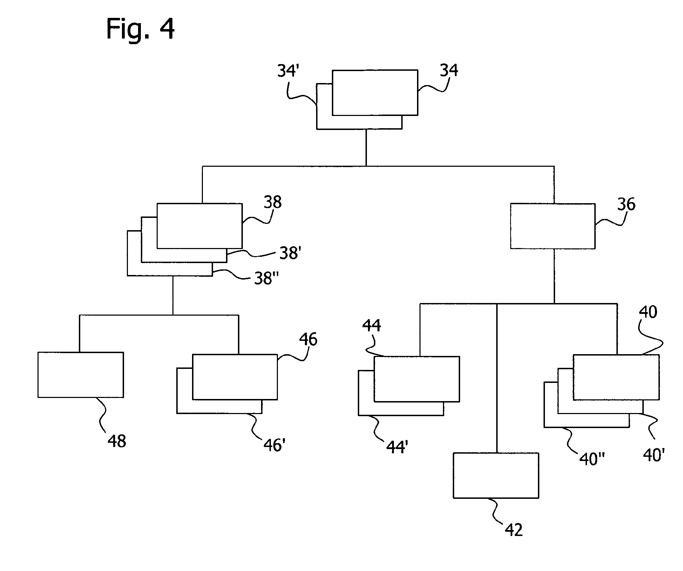

Treten im Zusammenhang mit einem Informationsobjekt Änderungen auf, kann es erforderlich sein, nicht nur für dieses Informationsobjekt eine weitere Version zu erstellen, sondern auch für ein oder mehrere andere Informationsobjekte, die mit dem betreffenden einen Informationsobjekt logisch verknüpft sind. Vorzugsweise werden dabei von der Komponente 28 nur für diejenigen Informationsobjekte Versionen erzeugt, die dies unbedingt erfordern. Es kann somit im Zusammenhang mit einem Kundenauftrag über dessen Lebenszyklus hinweg eine unterschiedliche Anzahl von Versionen für unterschiedliche Informationsobjekte dieses Kundenauftrags entstehen. Fig. 4 zeigt beispielhaft einen Datenbaum für einen Kundenauftrag, nachdem bereits Änderungen an einzelnen Informationsobjekten des Kundenauftrags aufgetreten sind. Dieser beispielhafte Datenbaum weist an seinem Kopf einen Datensatz 34 als erste Version eines den Kundenauftrag allgemein beschreibenden Geschäftsfall-Informationsobjekts auf. Außerdem enthält er einen Datensatz 34', der eine weitere, spätere Version des Geschäftsfall-Informationsobjekts beschreibt. Dabei kann, wie oben angesprochen, das Statusfeld des Datensatzes 34' einen anderen Status enthalten als das des Datensatzes 34, muss aber nicht. Zumindest die Zeitstempel der Datensätze 34, 34' unterscheiden sich jedoch.

Auf der Ebene der Transaktionen weist der Datenbaum der Fig. 4 einen Datensatz 36 auf, der eine erste Transaktion repräsentiert, von der nur eine einzige Version vorliegt, sowie Datensätze 38, 38' und 38", die jeweils eine unterschiedliche Version einer zweiten Transaktion repräsentieren. Beide Transaktionen sind demselben Geschäftsfall zugeordnet, d.h. die Datensätze 36, 38, 38', 38" sind logisch mit den Datensätzen 34, 34' verknüpft, nämlich beispielsweise über eine gemeinsame Geschäftsfall-Identifikationsnummer.

Auf der darunterliegenden Ebene der Transaktionsobjekte enthält der Datenbaum der Fig. 4 ferner drei Datensätze 40, 40', 40", die drei verschiedene Versionen eines ersten Transaktionsobjekts der ersten Transaktion darstellen, einen Datensatz 42, der eine einzige Version eines zweiten Transaktionsobjekts der ersten Transaktion darstellt, sowie zwei Datensätze 44, 44', die zwei verschiedene Versionen eines dritten Transaktionsobjekts der ersten Transaktion darstellen. Außerdem weist der Datenbaum zwei Datensätze 46, 46' auf, die zwei verschiedene Versionen eines ersten Transaktionsobjekts der zweiten Transaktion repräsentieren, sowie einen Datensatz 48, der eine einzige Version eines zweiten Transaktionsobjekts der zweiten Transaktion darstellt. Die Datensätze der untersten Hierarchieebene sind logisch mit genau einem Datensatz der mittleren Hierarchieebene verknüpft, also mit genau einer Transaktion. Um diese logische Zuordnung kenntlich zu machen, kann den einzelnen Transaktionen von der Komponente 28 eine eindeutige Transaktions-Identifizierungsnummer zugeteilt werden - genauso wie den Geschäftsfällen eine eindeutige Geschäftsfall-Identifikationsnummer zugeteilt wird. Diese Transaktions-Identifizierungsnummer wird in jeden Datensatz eingetragen, der eine Version der betreffenden Transaktion darstellt, sowie in jeden Datensatz, der eine Version eines der betreffenden Transaktion zugehörigen Transaktionsobjekts darstellt. Im Datenformat der Fig. 2 könnte eines der weiteren Felder 24, 26, ... zur Eintragung der Transaktions-Identifizierungsnummer genutzt werden.

Das Datenbanksystem 32 umfasst im gezeigten Beispielfall zwei Datenbanken 50, 52, von denen eine, nämlich die Datenbank 50, als aktuelle Datenbank zur Speicherung aktueller Informationen dient, während die andere Datenbank 52 als historische Datenbank dient, in die die Datensätze aus der Datenbank 50 abhängig von bestimmten Bedingungen ausgelagert werden. Alle der Komponente 30 zugeführten Datensätze werden zunächst in die Datenbank 50 eingeschrieben, bevor sie zu einem späteren Zeitpunkt in die Datenbank 52 ausgelagert werden. Die Datenbank 50 ist erheblich kleiner als die Datenbank 52; beispielsweise macht das in ihr gespeicherte Datenvolumen nur etwa 3% des gesamten Datenvolumens des Datenbanksystems 32 aus, während die verbleibenden etwa 97% in der Datenbank 52 aufgenommen sind. Bei einem alternativen Ausführungsbeispiel können statt einer einzigen aktuellen Datenbank 50 zwei oder mehr solcher aktueller Datenbanken vorgesehen sein, denen die Datenbank 52 gemeinsam zugeordnet ist. Das heißt, die Datenbank 52 empfängt Datensätze aus jeder der mehreren aktuellen Datenbanken.

Die Auslagerung der Datensätze von der Datenbank 50 in die Datenbank 52 wird von geeigneter Software der Komponente 30 bewirkt. Diese Software prüft hierzu Datensätze, die in der Datenbank 50 gespeichert sind, daraufhin, ob sie eine oder mehrere vorbestimmte Bedingungen erfüllen. Wenn ein Datensatz diese Bedingung(en) erfüllt, wird zumindest er in die Datenbank 52 ausgelagert. Bei einer bevorzugten Ausführungsform werden abhängig von einer solchen Auslagerung eines Datensatzes ggf. auch ein oder mehrere weitere Datensätze aus der Datenbank 50 in die Datenbank 52 ausgelagert. Insbesondere kann die Software der Komponente 30 dazu eingerichtet sein zu prüfen, ob zu einem Datensatz, der ausgelagert werden soll, ältere Versionen in der Datenbank 50 vorhanden sind. Wenn ja, bewirkt die Software, dass auch alle älteren Versionen des betreffenden Datensatzes, d.h. des hierdurch repräsentierten Informationsobjekts, ausgelagert werden.

Bei einer Ausführungsform werden abhängig davon, dass ein Datensatz die Auslagerungsbedingung(en) erfüllt, auch all diejenigen Datensätze ausgelagert, die hierarchisch darunterliegende Informationsobjekte repräsentieren. Insbesondere kann dieses Prinzip dann angewendet werden, wenn die jüngste Version des obersten Informationsobjekts in der Hierarchie der Informationsobjekte eines Geschäftsfalls die Auslagerungsbedingung(en) erfüllt. Es wird dann der gesamte Datenbaum dieses Geschäftsfalls ausgelagert, einschließlich etwaiger älterer Versionen des obersten Informationsobjekts (auf der Geschäftsfallebene) sowie aller Versionen der Informationsobjekte auf der Transaktionsebene und auf der Ebene der Transaktionsobjekte. Es kann sogar vorgesehen sein, dass die Software der Komponente 30 allein solche Datensätze auf die vorbestimmte(n) Auslagerungsbedingung(en) hin prüft, die Informationsobjekte der obersten Hierarchieebene repräsentieren. Bei einer solchen Variante erfolgt eine Auslagerung von Datensätzen, die Informationsobjekte einer anderen als der obersten Hierarchieebene darstellen, nur dann, wenn ein zugehöriger Datensatz der obersten Hierarchieebene die Auslagerungsbedingung(en) erfüllt.

Als eine Auslagerungsbedingung kann vorgesehen sein, dass das Statusfeld 22 des zu prüfenden Datensatzes einen vorbestimmten Status enthält. Insbesondere kann als Bedingung vorgesehen sein, dass das Statusfeld der jüngsten Version des hierarchisch obersten Informationsobjekts einen solchen vorbestimmten Status anzeigt. Im Beispielfall der Modellierung von Bankdienstleistungen kann der vorbestimmte Status einer sein, der anzeigt, dass ein Kundenauftrag beendet wurde und keine weiteren Transaktionen im Rahmen dieses Kundenauftrags seitens der Bank vorzunehmen sind. Bei einer solchen Ausführungsform werden demnach die Datensätze, die die verschiedenen Informationsobjekte eines Kundenauftrags bzw. Geschäftsfalls modellieren, solange in der Datenbank 50 gehalten, bis der Kundenauftrag beendet ist. Danach werden alle diese Datensätze in die Datenbank 52 ausgelagert.

Alternativ oder zusätzlich zu der vorstehenden Status-Bedingung kann vorgesehen sein, dass ein geprüfter Datensatz eine vorbestimmte Zeitbedingung erfüllen muss, bevor er von der aktuellen Datenbank 50 in die historische Datenbank 52 umgeschrieben wird. Eine mögliche Zeitbedingung betrifft die Zeitdauer, die der betreffende Datensatz schon in der aktuellen Datenbank 50 existiert. Bei Datensätzen, die den oben erwähnten Zeitstempel enthalten, ist diese Zeitdauer einfach feststellbar, wenn davon ausgegangen wird, dass der Zeitstempel im wesentlichen denjenigen Zeitpunkt widerspiegelt, zu dem der betreffende Datensatz in die Datenbank 50 eingeschrieben wurde. Es kann dann eine vorbestimmte Zeitspanne definiert sein, die ein geprüfter Datensatz seit seinem Einschreiben in die Datenbank 50 mindestens in dieser existiert haben muss, bevor er in die Datenbank 52 ausgelagert werden darf. Diese Zeitspanne kann je nach Anwendungsfall beliebig gewählt werden, beispielsweise im Tages-, Wochen- oder Monatsbereich.

Eine andere Möglichkeit einer Zeitbedingung besteht darin, einen bestimmten Zeitpunkt als Prüfkriterium zu definieren, der mit einer Zeitangabe verglichen wird, die in den in der Datenbank 50 gespeicherten Datensätzen enthalten ist. Der oben angesprochene Zeitstempel ist ein Beispiel für eine solche Zeitangabe. Es ist jedoch auch vorstellbar, dass in der Datenbank 50 Datensätze gespeichert sind, die zwar keinen Zeitstempel zur Versionenidentifizierung enthalten, aber dennoch mit einem Zeitfeld versehen sind, dessen Inhalt eine Zeitangabe darstellt. Ein Beispiel hierfür ist der Ausführungstag einer Transaktion oder der Buchungstag einer Saldenposition. In diesem Zusammenhang ist darauf hinzuweisen, dass neben Datensätzen, die Informationsobjekte der in Figur 1 dargestellten Typen repräsentieren, selbstverständlich auch Datensätze in der Datenbank 50 enthalten sein können, die andere Informationsobjekte darstellen, beispielsweise Kontopositionen, die sich aus einem Transaktionsobjekt vom Typ Wertpaket ergeben, oder Kontosalden, die sich aus einer Vielzahl einzelner Kontobuchungen ergeben. Bei derartigen Datensätzen ist es ohne weiteres vorstellbar, dass sie eine oder mehrere Zeitangaben enthalten, die einen späteren Zeitpunkt als den Zeitpunkt der Erzeugung des betreffenden Datensatzes repräsentieren. Ein Datensatz beispielsweise, der eine sich aus einem Wertpapiergeschäft ergebende Umsatzposition repräsentiert, kann ein Wertstellungsdatum enthalten, das den Tag angibt, an dem die betreffende Umsatzposition auf dem Konto des Kunden tatsächlich verbucht werden soll. Dieser Wertstellungstag ist oft später als der Zeitpunkt, an dem der die Umsatzposition repräsentierende Datensatz erzeugt wird.

Der als Prüfkriterium verwendete Zeitpunkt wird zweckmäßigerweise abhängig von dem Zeitpunkt festgelegt, an dem die Prüfung der Datensätze in der Datenbank 50 stattfindet. Beispielsweise kann der als Prüfkriterium zu verwendende Zeitpunkt so festgelegt werden, dass er eine vorbestimmte Zeitspanne, beispielsweise sieben Tage, vor dem Tag liegt, an dem die Prüfung der Datensätze stattfindet. Bei der Prüfung wird dann verglichen, ob die in einem geprüften Datensatz enthaltene Zeitangabe einen Zeitpunkt angibt, der vor dem als Prüfkriterium verwendeten Zeitpunkt liegt oder nicht. Liegt dieser Zeitpunkt vor dem als Prüfkriterium verwendeten Zeitpunkt, bezeichnet also beispielsweise eine in einem Datensatz enthaltene Zeitangabe einen Tag, der mehr als sieben Tage vor dem Tag liegt, an dem die Prüfung stattfindet, so gilt die vorbestimmte Zeitbedingung in Bezug auf diesen Datensatz als erfüllt. Sofern keine weiteren Bedingungen von dem Datensatz zu erfüllen sind, kann er danach prinzipiell in die Datenbank 52 ausgelagert werden. Sind in einem Datensatz mehrere Zeitangaben enthalten, so kann es erforderlich sein, dass mehr als eine dieser Zeitangaben, gewünschtenfalls alle, die vorbestimmte Zeitbedingung erfüllen.

Datensätze, die Informationsobjekte der in Figur 1 gezeigten Typen repräsentieren, müssen vorzugsweise neben einer Zeit-Bedingung noch wenigstens eine weitere, zeitunabhängige Bedingung erfüllen, insbesondere die weiter oben diskutierte Status-Bedingung. Ältere Versionen eines Informationsobjekts 10, 12, 14 können somit länger, ggf. erheblich länger als eine vorbestimmte Mindestzeitspanne in der Datenbank existent sein, sofern sie nicht die Status-Bedingung erfüllen. Sobald jedoch eine jüngere Version des betreffenden Informationsobjekts sämtliche Auslagerungsbedingungen erfüllt, können zusammen mit dieser auch die älteren Versionen des Informationsobjekts in die Datenbank 52 mitausgelagert werden.

Durch die vorstehend erläuterte Auslagerung von Datensätzen aus der Datenbank 50 in die Datenbank 52 kann der Umfang der Datenbank 50 vergleichsweise klein gehalten werden, so dass jederzeit schnelle Schreibzugriffe auf die Datenbank 50 zum Einschreiben neuer Datensätze sowie Lesezugriffe durch in Fig. 3 schematisch angedeutete Anwendungsprogramme 54, 56, 58, ... möglich sind. Die Anwendungesprogramme 54, 56, 58, ... können auch auf die historischen Daten in der Datenbank 52 zugreifen.

Es kann sein, dass sich Datensätze, die schon in die Datenbank 52 ausgelagert wurden, im Nachhinein als inhaltlich fehlerhaft herausstellen. Beispielsweise kann es sein, dass zu einem späteren Zeitpunkt festgestellt wird, dass eine frühere Transaktion versehentlich oder unrichtig ausgeführt wurde. Da im Rahmen der Erfindung zeitaufwendige Modifikationen an bestehenden Datensätzen möglichst vermieden werden sollen, wird bei einer bevorzugten Ausführungsform in der Datenbank 50 eine in Fig. 3 angedeutete Tabelle 60 eingerichtet, in der Informationen über ungültige Datensätze der Datenbank 52 abgelegt werden. Beispielsweise sei angenommen, dass ein mit 62 bezeichneter Datensatz der Datenbank 52 ungültig ist. Dann wird in die Tabelle 60 die Datensatzkennung des Datensatzes 62 (hier beispielhaft "xyz" eingetragen und in Zuordnung zu der Datensatzkennung ein die Ungültigkeit des Datensatzes angebender Vermerk eingetragen, hier beispielsweise "u". Die Tabelle 60 kann beispielsweise dazu genutzt werden, zu einem geeigneten anderen Zeitpunkt, wenn genügend Zeit verfügbar ist, die ungültigen Datensätze in der Datenbank 52 zu eliminieren.

Die Datensätze, die die verschiedenen Informationsobjekte 10, 12, 14 bzw. deren Versionen repräsentieren, können in den Datenbanken 50, 52 in verschiedenen Tabellen abgespeichert werden, nämlich so, dass eine erste Tabelle oder ein Satz von ersten Tabellen zur Speicherung von Datensätzen dient, die jeweils ein Informationsobjekt 10 repräsentieren, eine zweite Tabelle oder ein Satz von zweiten Tabellen zur Speicherung von Datensätzen vorgesehen ist, die jeweils ein Informationsobjekt 12 repräsentieren, und ferner eine dritte Tabelle oder ein Satz von dritten Tabellen vorgesehen ist, in denen diejenigen Datensätze gespeichert werden, die jeweils ein Informationsobjekt 14 repräsentieren.

Die Prüfung des Inhalts der Datenbank 50 auf Auslagerungsfähigkeit erfolgt vorzugsweise in regelmäßigen Intervallen, beispielsweise einmal pro Woche. Bei einer bevorzugten Ausführungsform wird im Rahmen der Prüfung jeder in der Datenbank 50 gespeicherte Datensatz für sich daraufhin geprüft, ob er zumindest eine Zeitbedingung für die Auslagerung erfüllt. Wie bereits angesprochen, kann zumindest ein Teil der Datensätze zusätzlich auf mindestens eine weitere Auslagerungsbedingung geprüft werden. Für jeden Datensatz, der die Zeit-Bedingung und ggf. die weiteren(n) Auslagerungsbedingung(en) erfüllt, wird ein entsprechender Eintrag in eine Auslagerungsliste eingeschrieben. Sind zwei oder mehr aktuelle Datenbanken vorhanden, werden die Datensätze jeder dieser aktuellen Datenbanken überprüft und ggf. ein entsprechender Eintrag in der Auslagerungsliste gemacht. Nachdem alle aktuellen Datenbanken durchlaufen wurden, wird die Auslagerungsliste bevorzugt einer Nachprüfung unterzogen. Im Rahmen der Nachprüfung werden die selektierten und in der Auslagerungsliste vermerkten Datensätze auf eine oder mehrere weitere vorbestimmte Bedingungen geprüft, die von den selektierten Datensätzen erfüllt werden müssen, bevor sie in die Datenbank 52 ausgelagert werden. Die bei der Nachprüfung zu prüfenden Regeln können beispielsweise Kontextregeln umfassen, die den Kontext der Datensätze im Verhältnis zueinander betreffen. So kann eine Nachprüfregel beispielsweise lauten, dass ein bestimmtes Informationsobjekt (Entität) nur dann ausgelagert werden darf, wenn zugleich ein logisch zugehöriges anderes Informationsobjekt mitausgelagert wird. Wird bei der Nachprüfung festgestellt, dass nur das eine Informationsobjekt selektiert wurde, nicht aber zugleich auch das andere, so erfüllt das eine Informationsobjekt (bzw. der diese repräsentierende Datensatz) nicht alle Bedingungen für die Auslagerung und muss deshalb in der aktuellen Datenbank 50 bleiben.

Die Vorgehensweise bei dieser Ausführungsform ist damit folgende: Zunächst wird ein erster Regelsatz, der eine oder mehrere Auslagerungsregeln enthält, angewendet, um aus den in der aktuellen Datenbank 50 enthaltenen Datensätzen einen Teil zu selektieren und entsprechende Einträge in einer Auslagerungsliste zu machen. In einem anschließenden Schritt werden die selektierten Datensätze anhand eines zweiten Regelsatzes, der wiederum eine oder mehrere Auslagerungsregeln enthält, einer Nachprüfung unterzogen. Wird dabei festgestellt, dass einzelne in der Auslagerungsliste vermerkte Datensätze doch nicht ausgelagert werden dürfen, werden ihre entsprechenden Einträge in der Auslagerungsliste gelöscht.

Die nach Abschluss der Nachprüfung in der Auslagerungsliste verbleibenden Datensätze werden daraufhin in die Datenbank 52 überschrieben und in der Datenbank 50 gelöscht. Der Datentransfer aus der aktuellen Datenbank 50 in die historische Datenbank 52 kann an einem anderen Zeitpunkt stattfinden als die Selektion und Nachprüfung der Datensätze. Beispielsweise kann für das Überschreiben der nach Nachprüfung in der Auslagerungsliste verbleibenden Datensätze ein Zeitpunkt festgelegt werden, der eine vorbestimmte Zeitspanne nach demjenigen Zeitpunkt liegt, an dem die Prüfroutine zur Selektion der Datensätze begonnen wird. Vorzugsweise erfolgt der Datentransfer aus der Datenbank 50 in die Datenbank 52 während Zeiten, in denen ansonsten nur schwacher Datenverkehr zur erwarten ist, beispielsweise nachts oder an Wochenenden. Nach Abschluss des Datentransfers wird die Auslagerungsliste gelöscht und steht somit für eine erneute Selektion von Datensätzen wieder zur Verfügung.

## Patentansprüche

1. Computer-implementiertes Verfahren zur Verwaltung von elektronischen Daten, umfassend die Schritte:
- Einschreiben eines Datensatzes in eine erste Datenbank (50),
- Prüfen des unveränderten Inhalts dieses einen Datensatzes auf mindestens eine vorbestimmte Bedingung und
- Einschreiben des einen Datensatzes in eine zweite Datenbank (52) abhängig von der Erfüllung der mindestens einen vorbestimmten Bedingung.

2. Verfahren nach Anspruch 1,
**gekennzeichnet durch** den Schritt: Löschen des einen Datensatzes in der ersten Datenbank (50) in engem zeitlichen Zusammenhang mit dem Einschreiben dieses Datensatzes in die zweite Datenbank (52) .

3. Verfahren nach Anspruch 1 oder 2,
**gekennzeichnet durch** den Schritt: Einschreiben eines oder mehrerer weiterer, mit dem einen Datensatz logisch verknüpfter Datensätze in die zweite Datenbank (52) abhängig vom Einschreiben des einen Datensatzes in die zweite Datenbank (52).

4. Verfahren nach Anspruch 3,
**gekennzeichnet durch** den Schritt: Löschen jedes weiteren Datensatzes in der ersten Datenbank (50) in engem zeitlichen Zusammenhang mit dem Einschreiben des betreffenden weiteren Datensatzes in die zweite Datenbank (52).

5. Verfahren nach einem der vorhergehenden Ansprüche,
**dadurch gekennzeichnet, dass** der Prüfschritt das Prüfen eines Statusfelds (22) des einen Datensatzes auf einen vorbestimmten Status umfasst.

6. Verfahren nach einem der vorhergehenden Ansprüche,
**dadurch gekennzeichnet, dass** der Prüfschritt das Prüfen umfasst, ob ein in dem einen Datensatz angegebener Zeitpunkt (TS) eine vorbestimmte Zeitbedingung erfüllt.

7. Verfahren nach einem der vorhergehenden Ansprüche,
**gekennzeichnet durch** den Schritt: Einschreiben einer Datensatzkennung eines bereits in die zweite Datenbank (52) eingeschriebenen Datensatzes (62) und - in Zuordnung zu der Datensatzkennung ("xyz") - eines diesen Datensatz als ungültig kennzeichnenden Ungültigkeitshinweises ("u") in die erste Datenbank (50).

8. Verfahren nach einem der vorhergehenden Ansprüche,
**dadurch gekennzeichnet, dass** der eine Datensatz eine Version eines Informationsobjekts (10, 12, 14) repräsentiert und zur Versionsidentifizierung einen Zeitstempel (TS) enthält.

9. Verfahren nach Anspruch 8,
**dadurch gekennzeichnet, dass** der Zeitstempel (TS) eine Datums- und Uhrzeitangabe enthält.

10. Verfahren nach Anspruch 8 oder 9,
**gekennzeichnet durch** die Schritte:
- Einschreiben mehrerer jeweils eine unterschiedliche Version desselben Informationsobjekts repräsentierender Datensätze (z.B. 34, 34') zu unterschiedlichen Zeitpunkten in die erste Datenbank (50), und
- Einschreiben jedes dieser Datensätze in die zweite Datenbank (52) abhängig von der Erfüllung der mindestens einen vorbestimmten Bedingung **durch** denjenigen dieser Datensätze, dessen Zeitstempel (TS) die jüngste Version des Informationsobjekts identifiziert.

11. Verfahren nach einem der Ansprüche 8 bis 10,
**gekennzeichnet durch** die Schritte:
- Einschreiben mehrerer Datensätze (z.B. 34, 36, 38, 40, 42, 44, 46, 48), die zumindest teilweise unterschiedliche, logisch miteinander verknüpfte Informationsobjekte repräsentieren, in die erste Datenbank (50) und
- Einschreiben jedes dieser Datensätze in die zweite Datenbank (52) abhängig von der Erfüllung der mindestens einen vorbestimmten Bedingung **durch** einen dieser Datensätze.

12. Verfahren nach Anspruch 11,
**dadurch gekennzeichnet, dass** die Informationsobjekte (10, 12, 14) hierarchisch miteinander verknüpft sind und die Datensätze abhängig davon in die zweite Datenbank (52) eingeschrieben werden, dass ein Datensatz, der ein Informationsobjekt (10) einer höchsten Hierarchieebene repräsentiert, die mindestens eine vorbestimmte Bedingung erfüllt.

13. Computerprogrammprodukt, welches die Ausführung des Verfahrens nach einem der vorhergehenden Ansprüche bewirkt, wenn es von einem Computer abgearbeitet wird.

14. Computerprogrammprodukt nach Anspruch 13,
**dadurch gekennzeichnet, dass** es auf einem computerlesbaren magnetischen oder optischen Informationsträger gespeichert ist.
